Europäisches Patentamt

(19) European Patent Office

Office européen des brevets

(11) Publication number: **0 162 822**
**A1**

## (12) EUROPEAN PATENT APPLICATION

(21) Application number: **85850134.9**

(22) Date of filing: **19.04.85**

(51) Int. Cl.⁴: **B 31 F 5/00**

(30) Priority: **24.04.84 SE 8402235**

(43) Date of publication of application:
**27.11.85 Bulletin 85/48**

(84) Designated Contracting States:
**AT BE CH DE FR GB IT LI NL**

(71) Applicant: **Alderbrant, Ellert**
**Orevägen 27**
**S-161 40 Bromma(SE)**

(71) Applicant: **Andersson, Leif Gösta**
**Turebergsvägen 16**
**S-183 40 Täby(SE)**

(71) Applicant: **Bengtsson, Raymond**
**Tosterövagen 11**
**S-125 42 Älvsjö(SE)**

(72) Inventor: **Alderbrant, Ellert**
**Orevägen 27**
**S-161 40 Bromma(SE)**

(72) Inventor: **Andersson, Leif Gösta**
**Turebergsvägen 16**
**S-183 40 Täby(SE)**

(72) Inventor: **Bengtsson, Raymond**
**Tosterövagen 11**
**S-125 42 Älvsjö(SE)**

(74) Representative: **Onn, Thorsten et al,**
**AB STOCKHOLMS PATENTBYRA Box 3129**
**S-103 62 Stockholm(SE)**

(54) **Method and device for application of one or more material strips to a continuously advanced web.**

(57) The invention relates to a method and device at application of one or more material strips (1, 2) along a continuously advance web (3). The material strips are led from a storage roller (5) via guide rollers (9), which are disposed together with the storage roller in a movable, spring-loaded cradle (6-8), to an applicator roller (4) in order to be applied to the web (3). At further advancing of the web with adapted material strips the web is drawn through a system of rollers (15-17) which are provided with grooves or elevations (18) adapted to the width, place of application and thickness of the applied material strip (1,2) so that the latter is not laterally moved or is stretched independently of the web.

EP 0 162 822 A1

./...

## Method and device for application of one or more material strips to a continuously advanced web

This invention relates to a method and a device for application of one or more material strips, e.g. self-adhesive tape strips, to a continuously advanced web, especially a web of a stretchable material such as a plastic foil.

In production of certain articles it is sometimes desired to apply continuously a strip of e.g. self-adhesive tape onto a continuously advanced web of plastic foil or paper. This may be troublesome to accomplish with a fair result, as it may be difficult to control the often narrow tape so that it is correctly positioned on the web. Moreover, the tape as well as the web is usually more or less stretchable and elastic, and if the tension in both of them is not carefully adjusted continuously one thereof will then spring back more than the other, plaits and creases arising. Finally, it is troublesome in general to handle the narrow and tacky tape strips without their adhering to unsuitable places or giving off adhesive which then gets onto non-desired places in the apparatus or on the web.

It is the object of the invention to provide a method and a device enabling application of one or more material strips to a continuously advanced path without encountering the above-mentioned drawbacks.

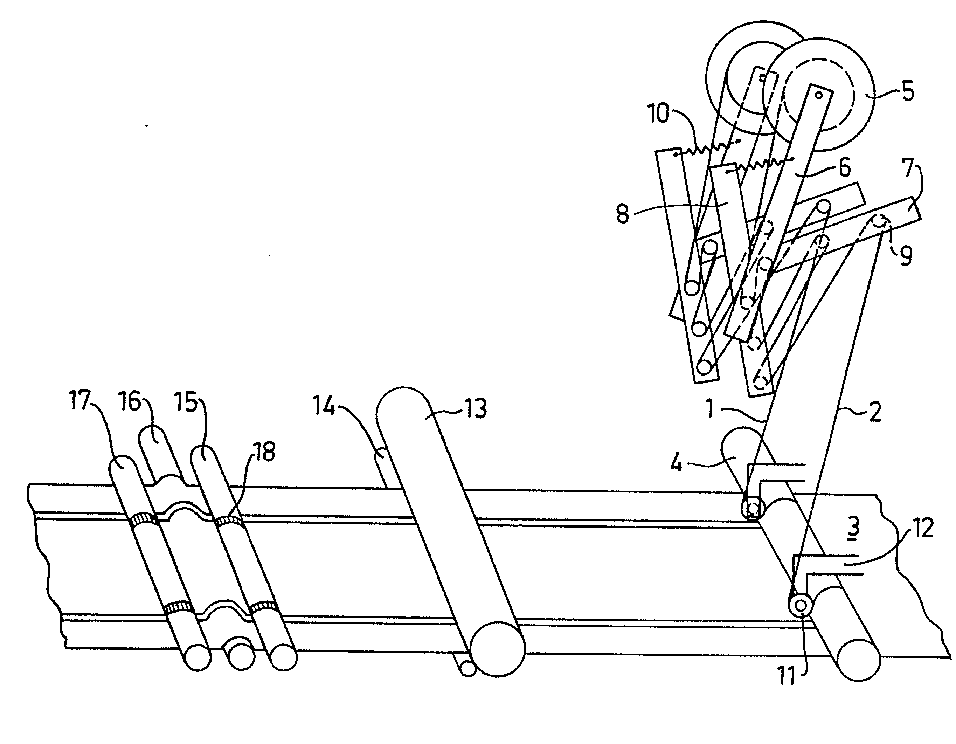

The invention is described more closely in the form of an illustrative example shown on the drawing, where the figure shows schematically a device according to the invention for applying two tape strips onto a web of plastic foil.

Thus, in the drawing figure there is shown a device for applying two self-adhesive tape strips 1, 2 longitudinally on a web 3 of plastic foil. The web 3 is unwound from a storage roller not shown and is led via guide rollers (not shown either) up to an applicator roller 4 to be combined there with the tape strips 1 and 2. The tape strips are unwound from each their storage roller 5 disposed in a movable, spring-loaded cradle for each tape strip. The spring-loaded cradle is formed by three arms 6, 7, 8, the storage roller 5 being disposed at the end of a first arm 6 which is rigidly connected to a second arm 7 close to its other end. On this second arm 7 guide rollers 9 are arranged as well as on the third arm 8 which is rotatable about one point relative to the first and the second arms 6, 7. A spring 10 is placed between the first arm 6 and the third arm 8 to prestress the tape strip 2 which is led from the storage roller 5 via a guide roller 9 on the third, movable arm 8 and then to and fro between additional guide rollers on the second and third arms 7 and 8, respectively, in order to finally be fed downwards towards the applicator roller 4 from a guide roller on the second arm. The spring 10 placed between the arms 6 and 8 has alternative points of attachment on the arm 8 to enable adjustment of the spring prestress.

Close to the applicator roller 4 an idler 11 is arranged for each tape strip 1, 2, which is affixed to an adjustable arm 12 so arranged that the idler 11 is hanging somewhat over the web 3 immediately after the applicator roller 4 in the direction of the motion of the web so that the idler is leading the tape strip to the exact correct position on the applicator roller and so that the tape strip is led about the applicator roller across at least 180$^{\circ}$ of its periphery before the tape strip is adapted to the plastic foil web 3. The adjustable arm 12 supporting the idler 11 is movable lengthwise of the applicator roller 4 as is also the case with the arms 6-8 supporting the storage roller 5 and the guide rollers 9 so that the place of the adaptation of the tape strip on the foil web can be varied.

For further advancing of the plastic foil web 3 with adapted tape strips 1, 2 two drive rollers 13, 14 serve which are arranged in the directtion of motion of the web after the applicator roller 4, the plastic foil web with the adapted tape strips passing between the two drive rollers 13, 14.

For drawing the plastic foil with the adapted tape strips to a cutting device (not shown) three draw rollers 15, 16 and 17 serve, the foil web passing below the two outer draw rollers 15 and 17 and above the intermediate draw roller 16. As the surface of the web  which the draw

rollers 15-17 meet is not quite plane, due to the adapted tape strips, completely plane draw rollers would cause problems in that the foil web would be drawn obliquely and be creased. Therefore the draw rollers are provided with elevations 18 where the foil web is not provided with the tape strips. These elevations are of the same thickness as the applied tape strips and compensate the increase of thickness caused by the tape strips. The elevations 18 also provide a lateral guiding of the foil web and may be achieved by adhesion of a suitable coating material on the draw rollers. Such an adhered elevation is preferred if several different products with different location of the tape strips are to be produced in the same machine, as the elevation can be replaced to be adapted to the thickness and the distance between the applied tape strips. Should merely one product be produced in the machine the draw rollers can instead be turned out at the location of the tape strips to provide a plane contact.

As self-adhesive tape strips are to be applied to the web the surface which the tape strips get in contact with, i.e. the guide rollers 9, the idlers 11 and the rollers 4 and 13-17 must be coated with a release agent so that the tape strips do not stick to or give off adhesive.

In the illustrative example described above the invention has been described in connection with applying two tape strips to a plastic foil web. However, the invention is not restricted to this but relates to applying material strips in general to a continuously advanced arbitrary web. What is essential for the invention is that a tensile force is achieved during the entire application process acting evenly across the whole web and the material strips. Two different types of material strips close to each other, e.g. a not self-adhesive material strip which is fastened with a simultaneously applied self-adhesive tape strip, can also be applied by the invention.

_ _ _ _ _ _ _ _ _ _

Patent Claims

1. A method for application of one or more material strips (1, 2) longitudinally on a continuously advanced web (3), c h a r a c t e r i z e d in that the material strip is unwound from a storage roller (5) and led between a number of guide rollers (9) for adjustment and levelling of the tensile stress, after which the material strip (1, 2) is combined with the web at an applicator roller (4), where the material strip is led over an idler (11) defining the lateral location of the material strip over the applicator roller and consequently also on the web.

2. The method of claim 1, c h a r a c t e r i z e d in that the lateral location of the material strip (1, 2) is adjusted by lateral displacement of the idler (11).

3. The method of claim 1 or 2, c h a r a c t e r i z e d in that the web (3) with applied material strip (1, 2) is advanced further by being led through a system of rollers (15, 17) provided with grooves or elevations (18) adapted to the width, place of application and thickness of the applied material strip (1, 2) so that the material strip is not moved laterally or stretched independently of the web.

4. A device at application of one or more material strips (1, 2) longitudinally on a continuously advanced web (3), c h a r a c t e r i z e d in that guide rollers (9) disposed in a spring-loaded cradle (6-8) are arranged for drawing the material strip (1, 2) from its storage roller, that an applicator roller (4) is arranged for applying the material strip to the web (3), said roller (4) being in contact with the web, and that an idler (11) is arranged adjacent the applicator roller in order to guide the material strip (1, 2) into the correct lateral position on the applicator roller (4) and the web (3).

5. The device of claim 4, c h a r a c t e r i z e d in that the idler (11) is laterally adjustable relative to the applicator roller (4) in order that the location of the material strip (1, 2) on the web (3) might be varied.

6. The device of claim 4 or 5, c h a r a c t e r i z e d

in that the storage roller (5) and part of the guide rollers (9) are arranged on reciprocally movable and spring-loaded arms (6, 7, 8) where the spring loading is accomplished by means of a spring (10) arranged between the arms and having alternative mounting points on at least one of the arms in order that the prestressing of the spring might be adjusted.

7. The device of any one of claims 4 to 6, c h a r a c - t e r i z e d in that a system of rollers (15, 16,17) provided with grooves or elevations (18) adapted to the width, place of application and thickness of the applied material strip (1, 2) is arranged in order to provide a constant tensile stress.

8. The device of claim 7, c h a r a c t e r i z e d in that the elevations (18) are detachably attached to the rollers (15-17).

9. The device of any one of claims 4-8, c h a r a c - t e r i z e d in that guide rollers (9), idlers (11) and rollers (4, 13, 14, 15, 16, 17) are treated with a release agent so that a material strip provided with adhesive does not stick or give off adhesive.

— — — — — — — — — — — — — — — —

**European Patent Office**

**EUROPEAN SEARCH REPORT**

| | DOCUMENTS CONSIDERED TO BE RELEVANT | | EP 85850134.9 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | <u>DE - C - 901 984</u> (KOENIG)<br>* Totality * | 1-9 | B 31 F 5/00 |
| X | <u>GB - A - 998 150</u> (ELITE FILING)<br>* Totality * | 1,2,4,<br>5 | |

| | TECHNICAL FIELDS SEARCHED (Int. Cl.4) |
|---|---|
| | B 31 F |

The present search report has been drawn up for all claims

| Place of search | Date of completion of the search | Examiner |
|---|---|---|
| VIENNA | 12-07-1985 | HOFMANN |